# EUROPÄISCHE PATENTSCHRIFT

(11) **EP 1 615 816 B1**
(45) Veröffentlichungstag und Bekanntmachung des Hinweises auf die Patenterteilung: **02.08.2006**
(21) Anmeldenummer: 04725626.8
(22) Anmeldetag: 03.04.2004
(51) Int. Cl.: B62D 29/00, B29C 45/14

(54) **HOHLKAMMER-VERBUNDBAUTEIL**
COMPOSITE HOLLOW CHAMBER PART
COMPOSANT COMPOSITE A ENCEINTE CREUSE

(30) Priorität: 15.04.2003 DE 10317217
(43) Veröffentlichungstag der Anmeldung: 18.01.2006
(73) Patentinhaber: LANXESS Deutschland GmbH, 51369 Leverkusen (DE)
(72) Erfinder: DAJEK, Ulrich, 51375 Leverkusen (DE); GOLDBACH, Hubert, 40882 Ratingen (DE)
(86) Internationale Anmeldenummer: PCT/EP2004/003556
(87) Internationale Veröffentlichungsnummer: WO 2004/091999

(56) Entgegenhaltungen:
- DE-A- 10 104 035
- DE-A- 19 848 516
- GB-A- 2 350 655
- US-A1- 2003 047 837

## Beschreibung

Die Erfindung betrifft ein Hohlkammer-Verbundbauteil, wenigstens bestehend aus einem einteiligen oder mehrteiligen Hohlprofil aus Metall oder Kunststoff und gegebenenfalls einem einteiligen oder mehrteiligen Stützelement aus Metall oder Kunststoff im Inneren des Hohlprofils, wobei das Stützelement mit dem Hohlprofil und/oder die Hohlprofil-Teile miteinander mittels thermoplastischem Kunststoff formschlüssig verbunden sind. Weiterhin betrifft die Erfindung ein Verfahren zur Herstellung eines solchen Hohlkammer-Verbundbauteils.

Derartige Hohlkammer-Verbundbauteile sind z.B. aus DE 198 48 516 bekannt. Zum Verbinden der Halbschale mit der Deckplatte bzw. der Deckschale wird angespritzter thermoplastischer Kunststoff eingesetzt. Dazu weisen die Halbschale und die Deckplatte z.B. einen umlaufenden Rand auf, der mit Durchbrüchen versehen ist, an denen z.B. Nietverbindungen aus angespritztem Kunststoff angebracht sind. Alternativ oder zusätzlich können auch Sicken vorgesehen sein, an denen ebenfalls eine schubfeste, formschlüssige Verbindung mittels angespritztem Kunststoff hergestellt werden kann. Darüber hinaus sind aus DE 198 48 516 andere Verfahren zum Verbinden zweier oder mehrerer Formteile wie Schweißen, Kleben, Bördeln, Clinchen, Nieten bekannt, welche einzeln oder in Kombination zum Verbinden von Formteilen eingesetzt werden können.

Die hoch mechanisch beanspruchbaren Hohlkammer-Leichtbauteile werden beispielsweise im Fahrzeugbau eingesetzt.

Der vorliegenden Erfindung liegt die Aufgabe zugrunde, ein Hohllcammer-Verbundbauteil zu schaffen, dessen Formteile mit hoher Fügegenauigkeit miteinander verbunden sind. Die Hohlkammer-Verbundbauteile sollen in einem möglichst einfachen Verfahren hergestellt werden können.

Gegenstand der Erfindung ist ein Hohlkammer-Verbundbauteil, wenigstens bestehend aus einem einteiligen oder mehrteiligen Hohlprofil aus Metall oder Kunststoff und gegebenenfalls einem einteiligen oder mehrteiligen Stützelement aus Metall oder Kunststoff im Inneren des Hohlprofils, wobei das Stützelement mit dem Hohlprofil und/oder die Hohlprofil-Teile miteinander mittels angespritztem thermoplastischem Kunststoff formschlüssig verbunden sind, dadurch gekennzeichnet, dass das Stützelement mit dem Hohlprofil und/oder die Hohlprofil-Teile durch plastische Verformung wenigstens eines Hohlprofil-Teiles beim Anspritzen des thermoplastischen Kunststoffs verbunden sind.

Das erfindungsgemäße Hohlkammer-Verbundbauteil weist ein einteiliges oder mehrteiliges Hohlprofil aus Metall oder Kunststoff auf. Das Hohlprofil kann offen sein, z.B. in Form einer Halbschale oder eines Rollprofils, oder geschlossen, z.B. in Form eines Rohres mit einem beliebigen, beispielsweise runden oder viereckigen, Querschnitt. Ein einteiliges Hohlprofil kann z.B. ein Rohr sein. Ein mehrteiliges Hohlprofil setzt sich z.B. aus zwei Halbschalen oder aus einer Halbschale und einer Deckplatte zusammen. Das Hohlprofil kann beliebig dreidimensional geformt sein. Außerdem können mehrere Hohlprofile miteinander verbunden sein und so eine komplexe dreidimensionale Hohlkammer, z.B. mit Verzweigungen, bilden. Ist das Hohlprofil mehrteilig, so sind die Hohlprofil-Teile, z.B. zwei Halbschalen, formschlüssig mittels angespritztem thermoplastischem Kunststoff miteinander verbunden.

Im Inneren des erfindungsgemäßen Hohlprofils befindet sich gegebenenfalls wenigstens ein Stützelement aus Metall oder Kunststoff. Das Stützelement ist mit dem Hohlprofil formschlüssig mittels angespritztem thermoplastischem Kunststoff verbunden. Das Stützelement kann einteilig oder mehrteilig sein. Das Stützelement kann außerdem entweder massiv oder mit Hohlräumen, Kanälen o. dgl. gefertigt sein. Bei einer entsprechenden Geometrie des Stützelements, beispielsweise einem kreuzförmigen Querschnitt, kann das Stützelement das Hohlprofil in mehrere Kanäle unterteilen, die z.B. als Kabelkanäle oder Luftkanäle dienen können. Das Stützelement kann teilweise oder vollständig an der Innenwand des Hohlprofils anliegen. Es kann beispielsweise dazu dienen, das Hohlprofil gegen den Spritzdruck des angespritzten Kunststoffs abzustützen, da beim Anspritzen von weiteren Formteilen oder Überspritzen des Hohlprofils unerwünschte plastische Verformungen auftreten können. Dabei liegt das Stützelement vorzugsweise nur in den Bereichen an der Innenwand an, in denen außen an das Hohlprofil weitere Formteile angespritzt werden oder das Hohlprofil umspritzt wird. Die Geometrie des Stützelementes wird so gewählt, dass es in dem Hohlprofil eine stützende Funktion gegen den Spritzdruck des Kunststoffs ausübt. Das Stützelement kann aber auch dazu dienen, die Steifigkeit und Festigkeit des Hohlprofils zu verbessern.

Erfindungsgemäß erfolgt die schubfeste, formschlüssige Verbindung des Stützelements mit dem Hohlprofil und/oder der Hohlprofil-Teile miteinander durch plastische Verformung wenigstens eines Hohlprofil-Teiles beim Anspritzen des thermoplastischen Kunststoffs. Ist das Hohlprofil mehrteilig und besteht beispielsweise aus zwei Halbschalen oder einer Halbschale und einer Deckplatte, so werden die Hohlprofil-Teile beispielsweise in einem Randbereich, in dem beide Profilteile übereinander bzw. aneinander liegen miteinander verbunden. Dabei weist eines der Profilteile im Randbereich Durchbrüche und/oder Sicken auf, welche von dem Randbereich des anderen Profilteils bedeckt sind. Ebenso kann auch alternierend das eine oder andere Profilteil Durchbrüche und/oder Sicken aufweisen, welche vom jeweils anderen Profilteil bedeckt sind. Durch den Spritzdruck beim Anspritzen des thermoplastischen Kunststoffs wird im Bereich des Durchbruchs das Profilteil, welches den Durchbruch bedeckt, plastisch verformt, indem es in den Durchbruch gedrückt wird. Der Spritzdruck des Kunststoffs ist so groß, dass das Profilteil aus Metall oder Kunststoff im Bereich des Anspritzpunktes verformt wird. Dazu weist der Formhohlraum des Spritzgießwerkzeugs im Bereich des Durchbruches einen Hohlraum auf, in den der angespritzte Kunststoff nicht eintreten kann. Durch die plastische Verformung entsteht eine schubfeste, formschlüssige Verbindung der beiden Profilteile.

Dementsprechend ist in einer bevorzugten Ausführungsform das Hohlprofil zweiteilig und liegen die beiden Hohlprofil-Teile in einem Randbereich aneinander, wobei in dem Randbereich eines der Hohlprofil-Teile Durchbrüche und/oder Sicken aufweist und das andere Hohlprofil-Teil im Bereich der Durchbrüche und/oder Sicken durch das Anspritzen des thermoplastischen Kunststoffs plastisch verformt ist.

Für das erfindungsgemäße Verbundbauteil können im Falle von Hohlprofil-Teilen aus Metall oder Metalllegierungen Wanddicken in der Größenordnung von bis zu 2 mm eingesetzt werden. Bei Verbundbauteilen aus Kunststoff kann die Wanddicke sogar in der Größenordnung von bis zu 4 mm liegen. Daneben ist es auch möglich, bei hohen Spritzdrücken in der Größenordnung von bis zu 2000 bar und/oder verhältnismäßig dünnen Formteilen, z.B. aus Stahlblech, mit einer Dicke von 0,4 bis 1 mm, die beiden im Randbereich übereinander bzw. aneinander liegenden Formteile gemeinsam plastisch zu verformen, ohne dass Durchbrüche und/oder Sicken in einem der beiden Formteile vorgesehen sind.

Auf analoge Weise kann das Stützelement mit dem Hohlprofil verbunden sein. Dazu liegt das Stützelement im Bereich der plastischen Verformung nicht an der Innenwand des Hohlprofils an, sondern weist beispielsweise einen Hohlraum in Form eines Kanals, einer Aussparung o. dgl. auf. Beim Anspritzen des Kunststoffs von außen wird im Bereich der Aussparung des Stützelementes das Hohlprofil plastisch verformt, indem das Hohlprofil in die Aussparung o. dgl. gedrückt wird.

Das erfindungsgemäße Hohlprofil mit Stützelement kann teilweise oder vollständig umspritzt sein. Das Stützelement schützt das Hohlprofil dabei vor dem Kollabieren oder ungewollten Deformieren beim Anspritzen des Kunststoffs.

Bevorzugte Metalle für die Formteile sind Stahl, Nickel, Chrom, Eisen, Kupfer, Zink, Titan, Aluminium und Magnesium sowie Legierungen dieser Metalle.

Bevorzugte Kunststoffe für die Formteile sind unverstärkte, verstärkte und/oder gefüllte, thermoplastische Kunststoffe, z.B. Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Polyethylen (PE) oder eine Mischung dieser Kunststoffe.

Als thermoplastischer Kunststoff für die formschlüssige Verbindung der Formteile miteinander eignet sich insbesondere ein unverstärkter, verstärkter und/oder gefüllter Kunststoff auf Basis von Polyamid (PA), Polyester, insbesondere Polyethylenterephthalat (PET), Polybutylenterephthalat (PBT), Polystyrol (PS), syndiotaktische Polystyrol, Acrylnitril-Butadien-Styrol (ABS), Polybutylenterephthalat (PBT), thermoplastisches Polyurethan (PU), Polyolefin, insbesondere Polypropylen (PP), Polyethylen (PE), Polycarbonat (PC), Polypropylenoxid (PPO), Polysulfon (PSO), Polyphenylensulfid (PPS), Polyimid (PI), Polyetheretherketon (PEEK) oder eine Mischung dieser Kunststoffe.

Ein weiterer Gegenstand der Erfindung ist ein Verfahren zur Herstellung eines Hohlkammer-Verbundbauteils, wenigstens bestehend aus einem einteiligen oder mehrteiligen Hohlprofil aus Metall oder Kunststoff und gegebenenfalls einem einteiligen oder mehrteiligen Stützelement aus Metall oder Kunststoff im Inneren des Hohlprofils, wobei das Stützelement mit dem Hohlprofil und/oder die Hohlprofil-Teile miteinander mittels thermoplastischem Kunststoff formschlüssig verbunden werden, dadurch gekennzeichnet, dass das Stützelement mit dem Hohlprofil und/oder die Hohlprofil-Teile durch plastische Verformung wenigstens eines Hohlprofil-Teiles beim Anspritzen des thermoplastischen Kunststoffs verbunden werden.

Vorzugsweise erfolgt das formschlüssige Verbinden des Stützelements mit dem Hohlprofil und/oder der Hohlprofil-Teile miteinander mit dem Anspritzen von einem oder mehreren Formteilen an das Hohlprofil in einem Verfahrensschritt. In dieser Ausführungsform des Verfahrens erfolgen somit beide Verfahrensschritte, das formschlüssige Verbinden und das Anspritzen von weiteren Formteilen, in einem Verfahrensschritt. Weitere Formteile, welche an das Hohlkammer-Verbundbauteil angespritzt werden können, bestehen bevorzugt aus Kunststoff, z.B. unverstärkte, verstärkte und/oder gefüllte, thermoplastische Kunststoffe, z.B. Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Poyethylen (PE) oder eine Mischung dieser Kunststoffe oder Metall, z.B. Stahl, Nickel, Chrom, Eisen, Kupfer, Zink, Titan, Aluminium und Magnesium sowie Legierungen dieser Metalle.

Das erfmdungsgemäße Hohlkammer-Verbundbauteil hat den Vorteil, dass die Verbindung der Formteile mit hoher Genauigkeit und Reproduzierbarkeit miteinander verbunden werden und dabei kein Abstimmungsaufwand der Fügepositionen zueinander erforderlich ist. Die Genauigkeit ist höher als bei der Anwendung einer separaten Fügetechnik wie z.B. Schweiß- oder Nietoperationen. Das erfmdungsgemäße Verfahren zur Herstellung eines Hohlkammer-Verbundbauteils hat darüber hinaus den Vorteil, dass das Verbinden der Profilteile miteinander und das Verbinden des Stützelements mit dem Hohlprofil sowie das Anspritzen weiterer Formteile in einem Arbeitsschritt erfolgt. Da gleichzeitig das Stützelement das Hohlprofil vor unerwünschten plastischen Verformungen beim Umspritzen mit Kunststoff bzw. beim Anspritzen von weiteren Formteilen schützt, muss auch keine weitere Vorkehrung gegen Verformungen des Hohlprofils getroffen werden wie z.B. das Einlegen eines massiven Kerns zum Abstützen des Hohlprofils, welcher nach dem Anspritzen wieder entfernt werden muss.

Nachfolgend wird die Erfindung anhand der beigefügten Zeichnungen beispielhaft näher erläutert.
Es zeigen:
- Figur 1: ein Ausschnitt aus einem Querschnitt durch das erfindungsgemäße Hohlkammer-Verbundbauteil aus zwei Halbschalen, welche im Randbereich formschlüssig miteinander verbunden sind
- Figur 2: ein Ausschnitt aus einem Querschnitt durch das erfindungsgemäße Hohlkammer-Verbundbauteil aus zwei Halbschalen und einer Stützstruktur, wobei die Stützstruktur mit dem Hohlprofil formschlüssig verbunden ist.

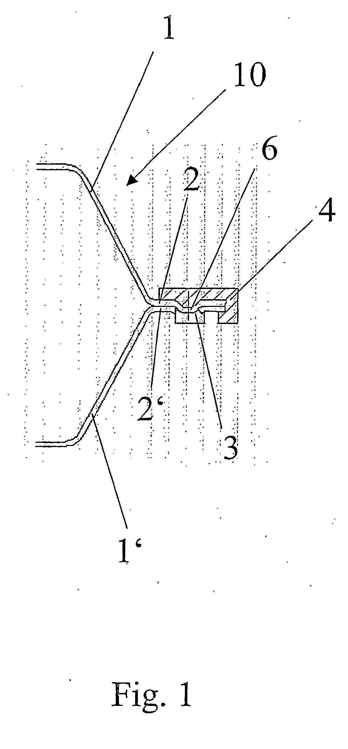

Figur 1 zeigt einen Ausschnitt aus einem Hohlprofil 10 aus zwei Halbschalen 1, 1', z.B. aus einem Metall wie Stahl, Nickel, Chrom, Eisen, Kupfer, Zink, Titan, Aluminium und Magnesium oder Legierungen dieser Metalle oder aus einem unverstärkten, verstärkten und/oder gefüllten, thermoplastischen Kunststoff wie Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Poyethylen (PE) oder einer Mischung dieser Kunststoffe. Die Halbschalen 1, 1' weisen einen abgewinkelten Randbereich 2, 2' auf. Eine der Halbschalen 1' besitzt im Randbereich 2' einen Druchbruch 3. Beim Anspritzen und Umspritzen der Kanten mittels thermoplastischem Kunststoff 4 wird die Halbschale 1 durch den Spritzdruck in den Durchbruch 3 gedrückt und damit ähnlich einer Sicke plastisch verformt 6. Auf diese Weise sind die beiden Halbschalen formschlüssig und schubfest miteinander verbunden.

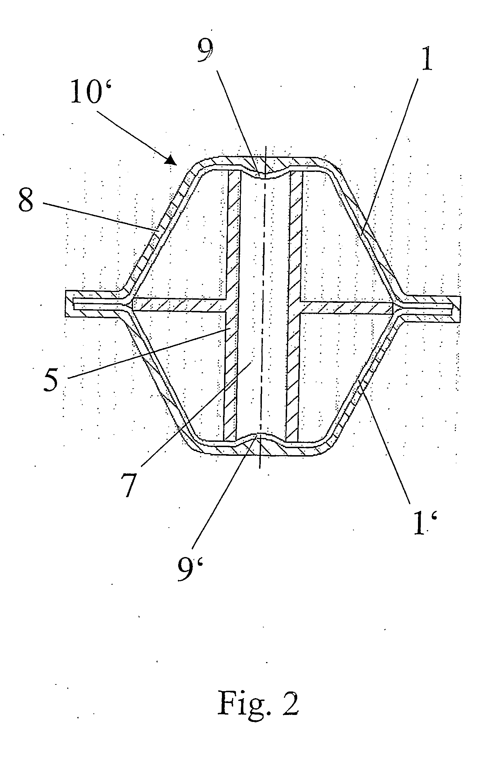

In Figur 2 (gleiche oder ähnliche Bauteile sind durch gleiche Bezugszeichen versehen) ist ein Hohlkammer-Verbundbauteil 10' bestehend aus zwei Halbschalen 1, 1' und einem Stützelement 5 im Innern des Hohlprofils 10' dargestellt. Die Halbschalen 1, 1' bestehen z.B. aus einem Metall wie Stahl, Nickel, Chrom, Eisen, Kupfer, Zink, Titan, Aluminium und Magnesium oder Legierungen dieser Metalle oder aus einem unverstärkten, verstärkten und/oder gefüllten, thermoplastischen Kunststoff wie Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Poyethylen (PE) oder einer Mischung dieser Kunststoffe. Das Stützelement 5 besteht z.B. aus einem Metall wie Stahl, Nickel, Chrom, Eisen, Kupfer, Zink, Titan, Aluminium und Magnesium oder Legierungen dieser Metalle oder aus einem unverstärkten, verstärkten und/oder gefüllten, thermoplastischen Kunststoff wie Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Polyethylen (PE) oder einer Mischung dieser Kunststoffe.

Das Stützelement 5 ist mit dem Hohlprofil 10' durch plastische Verformung 9, 9' der Halbschalen 1, 1' formschlüssig und schubfest verbunden. Die plastische Verformung 9, 9' erfolgt beim Überspritzen des Hohlprofils 10' mittels thermoplastischem Kunststoff 8. In dieser Ausführungsform weist das Stützelement 5 einen Kanal 7 auf. Im Bereich des Kanals 7 liefert das Stützelement 5 von innen beim Anspritzen des thermoplastischen Kunststoffs 8 von außen keinen Gegendruck zu dem Spritzdruck, so dass in diesem Bereich 9, 9' die Halbschalen 1, 1' in den Kanal 7 gedrückt werden.

## Patentansprüche

1. Hohlkammer-Verbundbauteil, wenigstens bestehend aus einem einteiligen oder mehrteiligen Hohlprofil (10, 10') aus Metall oder Kunststoff und gegebenenfalls einem einteiligen oder mehrteiligen Stützelement (5) aus Metall oder Kunststoff im Inneren des Hohlprofils (10, 10'), wobei das Stützelement (5) mit dem Hohlprofil (10,10') und/oder die Hohlprofil-Teile (1,1') miteinander mittels angespritztem thermoplastischem Kunststoff formschlüssig verbunden sind, **dadurch gekennzeichnet, dass** das Stützelement (5) mit dem Hohlprofil (10, 10') und/oder die Hohlprofil-Teile (1, 1') durch plastische Verformung wenigstens eines Hohlprofil-Teiles (1, 1') beim Anspritzen des thermoplastischen Kunststoffs (4, 8) verbunden sind.

2. Hohlkammer-Verbundbauteil nach Anspruch 1, **dadurch gekennzeichnet, dass** das Hohlprofil zweiteilig ist und die beiden Hohlprofil-Teile (1, 1') in einem Randbereich aneinander liegen, wobei in dem Randbereich eines der Hohlprofil-Teile Durchbrüche (3) und/oder Sicken (6) aufweist und das andere Hohlprofil-Teil im Bereich der Durchbrüche und/oder Sicken durch das Anspritzen des thermoplastischen Kunststoffs plastisch verformt ist.

3. Hohlkammer-Verbundbauteil nach einem der Ansprüche oder 2, **dadurch gekennzeichnet, dass** das Hohlprofil (10, 10') und/oder das Stützelement (5) unabhängig voneinander aus einem Metall, vorzugsweise Stahl, Nickel, Chrom, Eisen, Kupfer, Zink, Titan, Aluminium, Magnesium, oder einer Legierung dieser Metalle besteht.

4. Hohlkammer-Verbundbauteil nach einem der Ansprüche 1-3, **dadurch gekennzeichnet, dass** das Hohlprofil (10, 10') und/oder das Stützelement (5) unabhängig voneinander aus einem unverstärkten, verstärkten und/oder gefüllten, thermoplastischen Kunststoff, vorzugsweise Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Poyethylen (PE), oder einer Mischung dieser Kunststoffe besteht.

5. Verfahren zur Herstellung eines Hohlkammer-Verbundbauteils, wenigstens bestehend aus einem einteiligen oder mehrteiligen Hohlprofil (10, 10') aus Metall oder Kunststoff und gegebenenfalls einem einteiligen oder mehrteiligen Stützelement (5) aus Metall oder Kunststoff im Inneren des Hohlprofils, wobei das Stützelement mit dem Hohlprofil und/oder die Hohlprofil-Teile (1, 1') miteinander mittels angespritztem thermoplastischem Kunststoff formschlüssig verbunden werden, **dadurch gekennzeichnet, dass** das Stützelement (5) mit dem Hohlprofil (10, 10') und/oder die Hohlprofil-Teile (1, 1') durch plastische Verformung wenigstens eines Hohlprofil-Teiles (1, 1') beim Anspritzen des thermoplastischen Kunststoffs (4, 8) verbunden werden.

6. Verfahren nach Anspruch 5, **dadurch gekennzeichnet, dass** das formschlüssige Verbinden des Stützelements (5) mit dem Hohlprofil (10, 10') und/oder der Hohlprofil-Teile (1, 1') miteinander mit dem Anspritzen von einem oder mehreren Formteilen an das Hohlprofil in einem Verfahrensschritt erfolgt.

## Claims

1. Hollow chamber composite part, at least comprising a one-part or multi-part hollow profile (10, 10') of metal or plastic and, if appropriate, a one-part or multi-part supporting element (5) of metal or plastic inside the hollow profile (10, 10'), the supporting element (5) being positively connected to the hollow profile (10, 10') and/or the hollow profile parts (1, 1') being positively connected to one another by means of moulded-on thermoplastic material, **characterized in that** the supporting element (5) is connected to the hollow profile (10, 10') and/or the hollow profile parts (1, 1') are connected by plastic deformation of at least one hollow profile part (1, 1') when the thermoplastic material (4, 8) is moulded on.

2. Hollow chamber composite part according to Claim 1, **characterized in that** the hollow profile comprises two parts and the two hollow profile parts (1, 1') abut each other in an edge region, one of the hollow profile parts having apertures (3) and/or beads (6) in the edge region and the other hollow profile part being plastically deformed in the region of the apertures and/or beads by the moulding-on of the thermoplastic material.

3. Hollow chamber composite part according to either of Claims 1 and 2, **characterized in that** the hollow profile (10, 10') and/or the supporting element (5) consists independently of each other of a metal, preferably steel, nickel, chromium, iron, copper, zinc, titanium, aluminium, magnesium, or an alloy of these metals.

4. Hollow chamber composite part according to one of Claims 1-3, **characterized in that** the hollow profile (10, 10') and/or the supporting element (5) consists independently of each other of an unreinforced, reinforced and/or filled, thermoplastic material, preferably polycarbonate (PC), thermoplastic polyurethane (PU), polyesters, in particular polyethylene terephthalate (PET), polystyrene (PS), syndiotactic polystyrene, acrylonitrile-butadiene-styrene (ABS), polypropylene oxide (PPO), polysulphone (PSO), polyphenylene sulphide (PPS), polyimide (PI), polyketone (PEEK), polyamide (PA), polybutylene terephthalate (PBT), polypropylene (PP), polyethylene (PE), or a mixture of these plastics.

5. Process for producing a hollow chamber composite part, at least comprising a one-part or multi-part hollow profile (10, 10') of metal or plastic and, if appropriate, a one-part or multi-part supporting element (5) of metal or plastic inside the hollow profile, the supporting element being positively connected to the hollow profile and/or the hollow profile parts (1, 1') being positively connected to one another by means of moulded-on thermoplastic material, **characterized in that** the supporting element (5) is connected to the hollow profile (10, 10') and/or the hollow profile parts (1, 1') are connected by plastic deformation of at least one hollow profile part (1, 1') when the thermoplastic material (4, 8) is moulded on.

6. Process according to Claim 5, **characterized in that** the positive connecting of the supporting element (5) to the hollow profile (10, 10') and/or of the hollow profile parts (1, 1') to one another takes place by one or more moulded parts being moulded onto the hollow profile in one method step.

## Revendications

1. Composant composite à chambre creuse constitué d'au moins un profilé creux (10, 10') en une ou plusieurs pièces en métal ou en matière synthétique et d'éventuellement un élément de soutien (5) en une ou plusieurs pièces en métal ou en matière synthétique placé à l'intérieur du profilé creux (10, 10'), l'élément de soutien (5) étant relié en correspondance géométrique au profilé creux (10, 10') et/ou les parties (1, 1') du profilé creux étant reliées l'une à l'autre en correspondance géométrique au moyen de matière synthétique thermoplastique injectée, **caractérisé en ce que** l'élément de soutien (5) est relié au profilé creux (10, 10') et/ou **en ce que** les parties (1, 1') du profilé creux sont reliées par déformation plastique d'au moins une partie (1, 1') du profilé creux lors de l'injection de la matière synthétique thermoplastique (4, 8).

2. Composant composite à chambre creuse selon la revendication 1, **caractérisé en ce que** le profilé creux est en deux pièces et **en ce que** les deux parties (1, 1') du profilé creux reposent l'une contre l'autre par une bordure, l'une des parties du profilé creux présentant dans la bordure des perforations (3) et/ou des moulures (6), l'autre partie du profilé creux étant déformée plastiquement dans la zone des perforations et/ou des moulures lors de l'injection de la matière synthétique thermoplastique.

3. Composant composite à chambre creuse selon l'une des revendications 1 ou 2, **caractérisé en ce que** le profilé creux (10, 10') et/ou l'élément de soutien (5) sont réalisés indépendamment l'un de l'autre en un métal, de préférence l'acier, le nickel, le chrome, le fer, le cuivre, le zinc, le titane, l'aluminium, le magnésium ou un alliage de ces métaux.

4. Composant composite à chambre creuse selon l'une des revendications 1 à 3, **caractérisé en ce que** le profilé creux (10, 10') et/ou l'élément de soutien (5) sont réalisés indépendamment l'un de l'autre en une matière synthétique thermoplastique renforcée, non renforcée et/ou dotée d'une charge, de préférence en polycarbonate (PC), en polyuréthane thermoplastique (PU), en polyester, en particulier en poly(téréphtalate d'éthylène) (PET), en polystyrène (PS), en polystyrène syndiotactique, en acrylonitrile-butadiène-styrène (ABS), en poly(oxyde de propylène) (PPO), en polysulfone (PSO), en poly(sulfure de phénylène) (PPS), en polyimide (PI), en polycétone (PEEK), en polyamide (PA), en poly(téréphtalate de butylène) (PBT), en polypropylène (PP), en polyéthylène (PE) ou en un mélange de ces matières synthétiques.

5. Procédé de fabrication d'un composant composite à chambre creuse, constitué d'au moins un profilé creux (10, 10') en une ou plusieurs pièces en métal ou en matière synthétique et d'éventuellement un élément de soutien (5) en une ou plusieurs pièces en métal ou en matière synthétique placé à l'intérieur du profilé creux, l'élément de soutien étant relié en correspondance géométrique au profilé creux et/ou les parties (1, 1') du profilé creux étant reliées l'une à l'autre en correspondance géométrique au moyen de matière synthétique thermoplastique injectée, **caractérisé en ce que** l'élément de soutien (5) est relié au profilé creux (10, 10') et/ou **en ce que** les parties (1, 1') du profilé creux sont reliées par déformation plastique d'au moins une partie (1, 1') du profilé creux lors de l'injection de la matière synthétique thermoplastique (4, 8).

6. Procédé selon la revendication 5, **caractérisé en ce que** la liaison en correspondance géométrique entre l'élément de soutien (5) et le profilé creux (10, 10') et/ou les parties (1, 1') du profilé creux l'une avec l'autre s'effectue en une étape de traitement lors de l'injection d'une ou de plusieurs pièces façonnées sur le profilé creux.
